Europäisches Patentamt

(19) European Patent Office

Office européen des brevets

(11) Veröffentlichungsnummer: **0 187 874**
A1

## (12) EUROPÄISCHE PATENTANMELDUNG

(21) Anmeldenummer: 84710004.7

(22) Anmeldetag: 30.01.84

(51) Int. Cl.⁴: **B 09 B 1/00**
E 04 H 7/26

(43) Veröffentlichungstag der Anmeldung:
23.07.86 Patentblatt 86/30

(84) Benannte Vertragsstaaten:
BE DE FR NL

(71) Anmelder: STRABAG BAU - AG
Siegburger Strasse 241 Postfach 211120
D-5000 Köln 21(DE)

(72) Erfinder:
Der Erfinder hat auf seine Nennung verzichtet

(74) Vertreter: Hennicke, Albrecht, Dipl.-Ing. et al,
Patentanwälte Dipl.-Ing. Buschhoff Dipl.-Ing. Hennicke
Dipl.-Ing. Vollbach Kaiser-Wilhelm-Ring 24 Postfach 190
408
D-5000 Köln 1(DE)

(54) Lagerstätte für Abfälle und Verfahren zu ihrer Herstellung.

(57) Lagerstätte für Abfälle und Verfahren zum Herstellen, Füllen und Verschließen einer solchen Lagerstätte, bei dem auf einem geeigneten Areal (15) mehrere Behälter (18) aus Beton auf einer undurchlässigen Betonsohle (20) errichtet werden, die nacheinander mit den Abfällen unter dem Schutzeines Wetterschutzdaches (38) mit einer Stetigförderanlage (39) befüllt und mit einer Betondecke (43) verschlossen werden, so daß während des Befüllens kein Niederschlagswasser und während der ganzen Lagerzeit auch kein Grundwasser an die Abfälle herankommen und in ihnen enthaltene Schadstoffe herauslösen oder abschwemmen kann.

EP 0 187 874 A1

./...

FIG.1

PATENTANWÄLTE
DIPL.-ING. BUSCHHOFF
DIPL.-ING. HENNICKE
DIPL.-ING. VOLLBACH
KAISER-WILHELM-RING 24
5000 KÖLN 1

0187874

Aktenz.:

Reg.-Nr.

| Sa. 635 |
bitte angeben

KÖLN, den 27.01.1983
he/lu

Anm.: STRABAG Bau-AG
Siegburger Str. 241, 5000 Köln 21

Titel: Lagerstätte für Abfälle und Verfahren zu
ihrer Herstellung

Die Erfindung betrifft eine Lagerstätte für Abfälle, insbesondere für Abfälle, welche in Flüssigkeiten lösliche und/oder durch Flüssigkeiten abschwemmbare Schadstoffe enthalten, und sie hat auch ein Verfahren zum Herstellen einer solchen Lagerstätte zum Gegenstand.

Es ist notwendig, Abfälle, die nicht verbrannt oder auf chemischem Wege beseitigt werden können, auf Dauer so zu lagern, daß in ihnen enthaltene Schadstoffe die Umwelt nicht gefährden können. Derartige Abfälle, die auch als "Sondermüll" bezeichnet werden, sind beispielsweise die Verbrennungsrückstände von Müllverbrennungsanlagen, Gichtgasstaub, quecksilberhaltige Bariumsulfatschlämme, Hütten- und Gießereischutt, Lederchemikalien und Gerbstoffe, Rückstände aus der Rauchgasreinigung u.dgl. Derartige Abfälle können nicht durch Verbrennen oder chemische Prozesse beseitigt oder unschädlich gemacht werden, enthalten aber Schadstoffe in besonders hoher Konzentration, die z.T. auch in Wasser löslich sind oder durch Flüssigkeiten abgeschwemmt werden können. Bei Ablagerung in einfachen Mülldeponien besteht deshalb die Gefahr, daß diese Schadstoffe durch Regen oder Schnee aus den Abfällen ausgewaschen werden und ins Grundwasser gelangen, wo sie unabsehbare Schäden anrichten können.

Es ist bekannt, Sondermüll in Lagerstätten mit wasserundurchlässigem Boden, wie Lehm und Ton, in der Weise
zu lagern, daß in der Sohle zueinander parallel und im
Abstand voneinander angeordnete Gräben mit natürlicher
Böschung ausgehoben werden, in die die Abfälle von Lastkraftwagen abgekippt und in denen sie von einer Planierraupe verteilt und bis zur Höhe der Lagerstättensohle einplaniert werden. Die so gefüllten Gräben werden dann mit dem vorher ausgehobenen, wasserundurchlässigen Boden abgedeckt, wobei Wälle gebildet werden, welche ihrerseits die seitliche Begrenzung von neuen Gräben
bilden, welche sich oberhalb der zunächst ausgehobenen
Gräben befinden.

Dieses bekannte Verfahren ist sehr arbeits- und kostenaufwendig und nur bei solchen Lagerstätten anwendbar,
wo wasserundurchlässiger Boden zur Verfügung steht. Es
ist außerdem in hohem Maße von den Witterungsverhältnissen abhängig, da bindige Böden wie Lehm und Ton bei anhaltenden Niederschlägen nicht wirtschaftlich bewegt werden können. Ferner sind für den notwendigen Regenschutz
beim Einbringen der Abfälle in die Gräben sehr große
Dachkonstruktionen erforderlich, welche jeweils mindestens
einen Graben überspannen und sich über den gesamten zu
verfüllenden Bereich des Grabens erstrecken müssen. Gleichwohl kann nicht verhindert werden, daß Niederschlagswasser von dem noch nicht verfüllten Graben her in die deponierten Abfälle eindringt und dort Schadstoffe herauslöst, die dann an andere Stellen weitergetragen werden.
Ferner ist das bekannte Verfahren nicht nur mit bedeutenden Erdbewegungen verbunden, sondern schränkt auch den für
die Ablagerung zur Verfügung stehenden Raum erheblich dadurch ein, daß zwischen den mit Abfall zu verfüllenden
Gräben Erddämme stehenbleiben oder sogar aufgeschüttet
werden müssen. Der zur Verfügung stehende Raum kann deshalb nur zu einem geringen Teil ausgenutzt werden, so
daß für eine bestimmte Abfallmenge ein großes Areal erforderlich ist, das für andere Zwecke nicht genutzt
werden kann.

Aufgabe der Erfindung ist es, diese Nachteile zu vermeiden und eine Lagerstätte für Abfälle sowie ein Verfahren zum Herstellen, Füllen und Verschließen einer solchen Lagerstätte zu schaffen, bei dem in der Lagerstätte ein Maximum an Abfällen witterungsunabhängig und ohne
Gefahr für die Umwelt auf Dauer sicher abgelagert werden kann.

Diese Aufgabe wird bei einer Lagerstätte nach der Erfindung durch mehrere, auf einer undurchlässigen Unterlage
angeordnete Behälter mit diese seitlich begrenzenden Wänden gelöst, auf denen ein Wetterschutzdach angeordnet
ist, welches von einem Behälter zum anderen bewegbar ist.

Diese Ausgestaltung hat den Vorteil, daß die Abfälle beim
Ablagern in einen überschaubaren, seitlich begrenzten
und gegen Witterungseinflüsse, insbesondere gegen Regen
oder Schnee, vollständig geschützten Raum eingebracht
werden. Erdbewegungen sind beim Füllen der Lagerstätte
nicht erforderlich, so daß der Füllvorgang kontinuierlich
vonstatten gehen kann. Dies ist insbesondere bei der Ablagerung von solchen Abfällen wichtig, die kontinuierlich anfallen, wie dies beispielsweise bei Rückständen
von Müllverbrennungsanlagen der Fall ist. Da die Behälterwände nur den Seitendruck der eingefüllten Abfälle und
ein verhältnismäßig leichtes Wetterschutzdach aufnehmen
müssen, welches nur einen der Behälter überspannt, reichen verhältnismäßig dünnwandige Behälter aus. Der vorhandene Raum wird hierdurch gut ausgenutzt und je Kubikmeter Abfall ist nur eine geringe Grundfläche erforderlich.

Die Behälter haben zweckmäßig eine geschlossene Umfangswand, die aus Beton besteht. Sie können auf einer Betonsohle angeordnet werden und sind nach dem Füllen mit
einer Betondecke verschließbar. Hierdurch kann die Lagerstätte auch dort eingerichtet werden, wo der Boden
durchlässig ist. Gleichwohl sind Ausspülungen von Schadstoffen in den Untergrund nicht möglich, da die Betonsohle wasserundurchlässig ausgeführt werden kann. Außerdem wird durch die Betondecke dem Niederschlagswasser
der Zutritt zum Behälterinhalt verwehrt. Im Falle stark
betonaggressiver Stoffe wird zweckmäßig eine betonschützende Beschichtung vorgesehen.

Die Behälter können in besonders vorteilhafter Weise im
Gleitbauverfahren an Ort und Stelle betoniert werden. Es
ist aber auch möglich, die Wände der Behälter aus Stahl-
beton- oder Spannbetonfertigteilen herzustellen. Ferner
ist es möglich, die Behälter in einem gegenseitigen Abstand voneinander anzuordnen, der ebenso groß ist wie der
Behälterdurchmesser oder ein Vielfaches davon betragen kann.
Nach dem Füllen der Behälter können dann auch noch die Zwischenräume zwischen ihnen mit Abfall gefüllt werden. In
diesem Falle erstreckt sich die undurchlässige Sohle zweckmäßig über die gesamte Bodenfläche der Lagerstätte, also auch über den Bereich zwischen den Behältern, so daß
ein hermetischer Abschluß nach unten gewährleistet ist. Eine derartige Lagerstätte ist besonders wirtschaftlich, da
nur ein Teil der Grundfläche mit Behältern besetzt werden
muß, welche ihrerseits die Seitenwände auch für die zwischen ihnen abgelagerten Abfälle bilden.

Um eine besonders gute Überwachung und einen ganz sicheren Verschluß der abgelagerten Abfälle zu gewährleisten,
ist es zweckmäßig, die Behälter dicht an dicht nebeneinander zu setzen. In diesem Falle haben die Behälter zweckmäßig einen sechseckigen Grundriß, mit dem einerseits der
von der Füllung erzeugte Innendruck gut aufgenommen werden kann und der andererseits eine am meisten platzsparende Aufstellung der Behälter in der Struktur von
Bienenwaben gestattet. Selbstverständlich können die
Behälter jedoch auch einen kreisringförmigen Grundriß
oder einen rechteckigen Grundriß haben.

Zum Beschicken der Behälter wird zweckmäßig mindestens
ein überdachter Stetigförderer vorgesehen, der unmittelbar von Lastkraftwagen beschickt werden kann und von einem Behälter zum anderen versetzbar ist. Ein derartiger
Stetigförderer, der zweckmäßig ein Kratzkettenförderer
oder Trogbandförderer ist, gewährleistet einen kontinuierlichen und geordneten Betriebsablauf und ermöglicht
eine gleichmäßige Verteilung der Abfälle in jedem Behälter ohne zusätzliche Verteilergeräte. Hierbei ist es
zweckmäßig, wenn der Stetigförderer aus zwei Teilen besteht, von denen der eine Fördererteil den Transport der
Abfälle von der Abwurfstelle der Lastkraftwagen zur Mitte des zu füllenden Behälters übernimmt, während ein zweiter, im oberen Bereich des jeweiligen Behälters drehbar
angeordneter Förderer das auf ihn abgeworfene Füllgut
über den Umfang des Behälters verteilt.

Beim Herstellen, Füllen und Verschließen einer Lagerstätte für Abfälle wird nach der Erfindung so vorgegangen,
daß zunächst auf einem ebenflächigen, undurchlässigen Untergrund mehrere, an ihrer Oberseite zunächst offene Betonsilozellen errichtet werden, von denen die erste mit
einem ortsbeweglichen Wetterschutzdach und die übrigen
mit einer Absturzsicherung versehen werden, daß danach
eine Silozelle nach der anderen mit Hilfe einer Stetigförderanlage randvoll mit den Abfällen gefüllt, mit einer
Folie od.dgl. abgedeckt und mit einer bewehrten Betondekke dicht verschlossen wird, wobei das Wetterschutzdach
und die Stetigförderanlage von einer Silozelle zur anderen

weiterbewegt werden. Dieses Verfahren ermöglicht es,
Teilbereiche der Lagerstätte für die Ablagerung vorzubereiten und bereits vorbereitete Teilbereiche unabhängig von den Vorbereitungsarbeiten zu füllen, so daß
sich einerseits ein wirtschaftlicher Baufortschritt und
andererseits ein ungestörter Füllbetrieb ergibt. Durch
das aufeinanderfolgende Füllen der Silozellen ist es möglich, diese sogleich eine nach der anderen zu verschließen, so daß bereits eingelagerte Teilmengen jedem Zutritt entzogen sind und keine schädlichen Umwelteinflüsse mehr ausüben können. Ferner hat Niederschlagswasser
zu den abgelagerten Teilmengen keinen Zutritt mehr.

Besonders zweckmäßig ist es, wenn vor dem Errichten der
Betonsilozellen im Areal der Lagerstätte eine Baugrube
ausgehoben wird, deren Tiefe und Grundfläche der Höhe und
Grundfläche des von der Gesamtheit der Silozellen umschlossenen Raumes entspricht, und wenn die Baugrubensohle mit
einer an eine Revisionsanlage angeschlossenen, entwässernden Filterschicht und einer bewehrten Betonsohlplatte versehen wird und nach dem Errichten der Betonsilozellen der
diese umgebende Aushubraum mit Boden verfüllt wird. Diese Maßnahmen haben den Vorteil, daß für die Lagerstätte
über der vorhandenen Grundfläche ein großer Raum zur Ablagerung verfügbar wird, ohne daß sich die Silobehälter
sichtbar über dem Gelände erheben. Die an eine Revisionsanlage angeschlossene, entwässernde Filterschicht erlaubt eine zuverlässige Kontrolle der Dichtigkeit der einzelnen Betonsilozellen und läßt kein Grundwasser herangelangen.
Nach ihrem Verschließen mit der Betondecke werden die Silozellen zweckmäßig mit einer Erdbodenschicht überdeckt.
Die Lagerstätte kann dann noch bepflanzt werden, so daß
sie als solche nicht mehr erkennbar ist und sich harmonisch wieder in das Landschaftsbild einfügt. Zur Sicherheit, und damit später keine Kraftfahrzeuge den Lagerstättenbereich befahren können, ist es zweckmäßig, wenn
die Lagerstätte mit einem mindestens bis zur Oberkante
der Silos reichenden Schutzwall aus wasserundurchlässigem Material und mit einer Umzäunung umgeben wird.

Weitere Merkmale und Vorteile der Erfindung ergeben sich
aus der nachfolgenden Beschreibung und den Zeichnungen,
in denen bevorzugte Ausführungsformen der Erfindung an
Beispielen näher erläutert sind. Es zeigt:

Fig. 1      einen Teil einer Lagerstätte für Schadstoffe enthaltende Abfälle nach der Erfindung im Grundriß,

Fig. 2      den Gegenstand der Fig. 1 in einem Teillängsschnitt durch eine Silozelle nach
            Linie II - II der Fig. 1 im vergrößerten
            Maßstab,

Fig. 3      den Gegenstand der Fig. 2 in einem Horizontalschnitt nach Linie III - III in
            teilweise schematischer Darstellung,

Fig. 4      drei Silozellen für eine Lagerstätte nach
            der Erfindung in einer anderen Ausführungs-
            form,

Fig. 5      eine aus Betonfertigteilen hergestellte
            Lagerstätte nach der Erfindung mit rechteckigen Silozellen in einem Teilgrundriß,

Fig. 6      den Gegenstand der Fig. 5 in einem Vertikalteilschnitt nach Linie VI - VI, der eines der Fertigteilelemente zeigt,

Fig. 7    eine aus T-förmigen Betonfertigteilen
          aufgebaute Lagerstätte nach der Erfindung in einem Teilgrundriß und

Fig. 8    eines der bei der Lagerstätte nach Fig. 7
          verwendeten Betonfertigteile in einem vertikalen Schnitt nach Linie VIII - VIII der
          Fig. 7.

In den Zeichnungen ist eine Lagerstätte für schadstoffhaltige Abfälle, beispielsweise für Verbrennungsrückstände von Müllverbrennungsanlagen dargestellt, die in ihrer
Gesamtheit mit 10 bezeichnet ist. Die Lagerstätte 10 wird
von einem Schutzwall 11 aus wasserundurchlässigem Boden,
beispielsweise aus Lehm oder Ton umschlossen, dem noch
ein Abzugsgraben 12 vorgelagert ist und der an eine Revisionsanlage angeschlossen sein kann. Auf der Krone 13
des Schutzwalles befindet sich eine Umzäunung 14, die so
hoch ist, daß sie von Mensch und Tier nicht übertreten werden kann. Das von dem Schutzwall 11 umgebene Areal 15 ist
über einen zweispurigen Zufahrtsweg 16 erreichbar, der von
Lastkraftwagen 17 befahren werden kann.

In dem Lagerstättenareal 15 sind mehrere, im Grundriß
sechseckige Betonsilozellen 18 in mehreren parallelen Reihen A, B, C dicht an dicht so angeordnet, daß ihre sie
seitlich begrenzenden Wände 19 einander berühren. Die Betonsilozellen 18 stehen auf einer leicht bewehrten Betonsohle 20, die ihrerseits, zweckmäßig unter Zwischenschaltung einer nicht näher dargestellten Unterbetonschicht,
auf einer Filterschicht 21 aus Kies oder einem anderen geeigneten, wasserdurchlässigen Material ruht. In der Filterschicht 21 sind Dränagerohre 22 angeordnet, die an
hier nicht näher Revisionsschächte einen Revisionsanlage angeschlossen sind.

Die Filterschicht 21 ist auf den gewachsenen Boden 23
einer Baugrube aufgebracht, die mit wirtschaftlich arbeitenden Großgeräten im Bereich des gesamten Areals 15
der Lagerstätte 10 bis zu einer Tiefe ausgehoben ist, die
etwas größer ist als die Höhe H der Betonsilozellen 18,
so daß die Oberkante der Betonsilozellen etwa einen Meter unter der Geländeoberkante 24 liegt. Die Höhe der Betonsilozellen beträgt bei dem dargestellten und beschriebenen Ausführungsbeispiel etwa 15 m und ihr größter Durchmesser etwa 10 m. Die Silozellen können aber auch höher
oder niedriger sein und einen anderen Durchmesser aufweisen, falls sich hierdurch Vorteile ergeben oder wenn
die Art der Lagerstätte dies erfordert.

Der die Betonsilozellen 18 umgebende Aushubraum 25, insbesondere im Bereich der Baugrubenböschungen, wird nach
dem Errichten der Betonsilozellen 18 mit Boden bis zum
oberen Rand 26 der Seitenwände 19 der Betonsilozellen 18
verfüllt, so daß er von den Lastkraftwagen 17 befahren
werden kann, die die Abfälle anliefern.

Die Betonsilozellen 18, die auch einen kreisringförmigen
Querschnitt haben können, wie die Betonsilozellen 18',

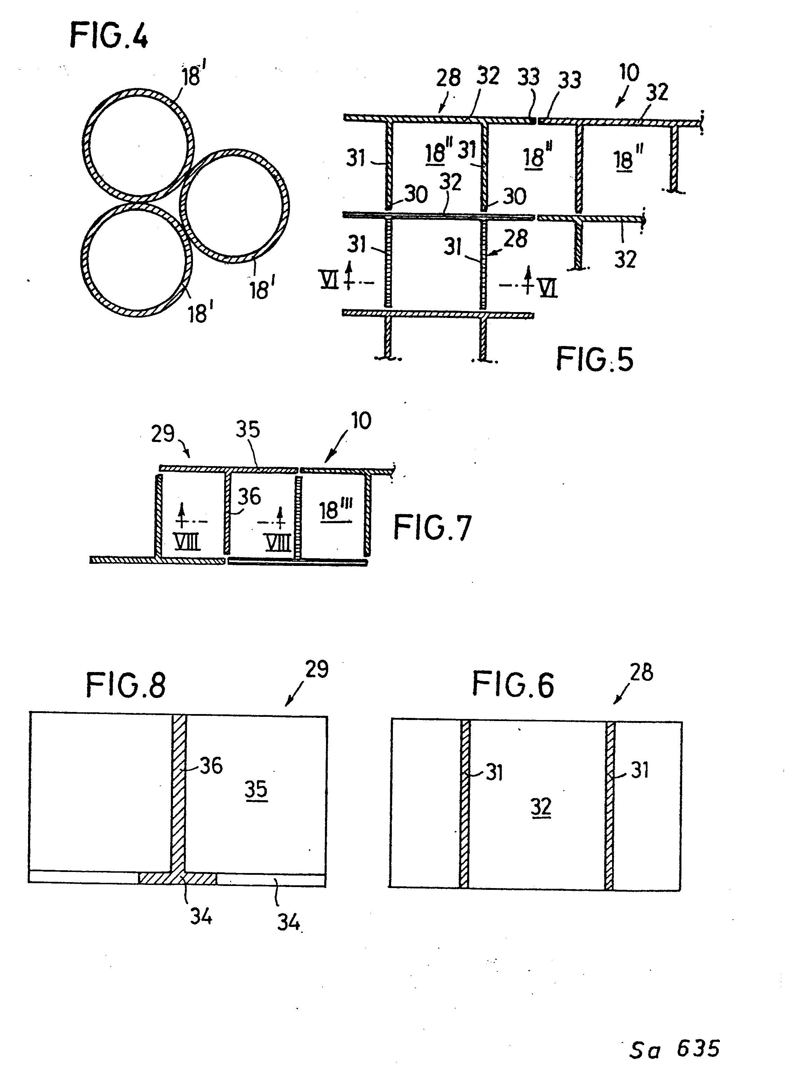

die in Fig. 4 dargestellt sind, werden zweckmäßig in Ortbeton im Gleitschalungsbau bis zur Oberkante 26 hergestellt und alle bis auf eine mit einer Absturzsicherung
27 versehen, die bei der dargestellten Ausführungsform
von mit Baustahlgewebematten belegten leichten Stahlrosten gebildet wird. Anstelle der Rostabdeckung kann
auch ein leichter Maschendrahtzaun als Absturzsicherung dienen, der auf den Umfassungswänden der Silozellen 18 bzw. 18' angebracht wird.

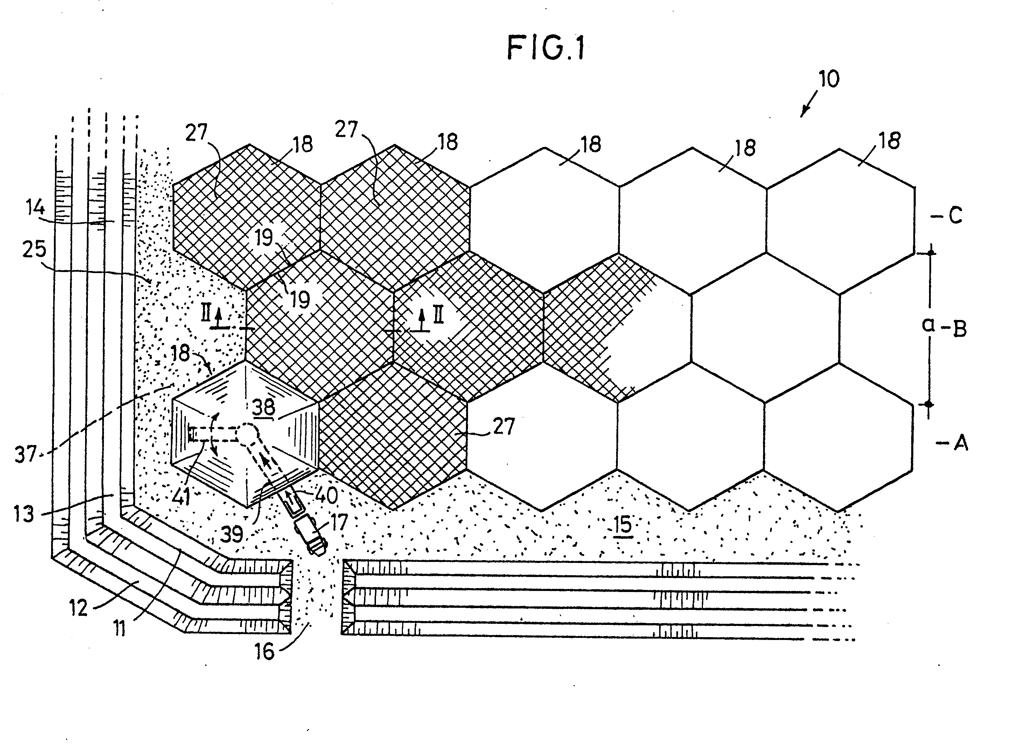

Anstelle der in den Figuren 1 bis 4 dargestellten Betonsilozellen 18 und 18' mit einer in Ortbeton hergestellten, geschlossenen Umfangwand können die Seitenwände 19 der Betonsilozellen auch von Stahlbeton- oder Spannbetonfertigteilen 28 bzw. 29 hergestellt werden, die in den Figuren 5 bis 8 dargestellt sind. Hierbei besteht die in Fig. 5 im Grundriß teilweise gezeigte Lagerstätte 10 aus Betonsilozellen 18", die von mehreren Meter hohen, im Grundriß doppel-T-förmigen Wandelementen 28 gebildet werden, die so aneinandergesetzt sind, daß die freien Enden 30 ihrer Stegwände 31 gegen die die Stegwände 31 verbindende Längsplatte 32 des benachbarten Fertigteilelementes 28 stoßen. In Längsrichtung stoßen die Stirnkanten 33 der Längsplatten aneinander, wo sie mit einer geeigneten Dichtung flüssigkeitsdicht miteinander verbunden werden können.

Bei der in Fig. 5 dargestellten Ausführungsform sind die Fertigteilelemente 28, welche die Silozellen 18" bilden, ebenso wie bei der in den Figuren 1 bis 3 dargestellten Ausführungsform auf einer durchgehenden Betonsohle 20 auf-gesetzt. Wenn der Untergrund, d.h. der gewachsene Boden 23 aus nicht durchlässigem Material, beispielsweise aus Lehm oder Ton besteht, ist eine Betonsohle nicht unbedingt notwendig. Die Betonsilozellen können dann unmittelbar auf den geebneten, gewachsenen Boden 23 aufgesetzt werden. Sie werden in diesem Falle zweckmäßig an ihrem unteren Rand mit einem Fundamentstreifen 34 versehen, wie dies bei den Betonfertigteilen 29 der in den Figuren 7 und 8 dargestellten Ausführungsform der Lagerstätte 10 dargestellt ist.

Bei dieser, in den Figuren 7 und 8 dargestellten Lagerstätte werden die Betonsilozellen 18"' von im Grundriß
T-förmigen Stahlbetonfertigteilen 29 gebildet, die eine Längsplatte 35 und einen Quersteg 36 aufweisen, die
beide am unteren Rand mit Fundamentstreifen 34 versehen
sind (Fig. 8). Die Betonfertigteilelemente 29 werden
ebenso wie bei der in den Figuren 5 und 6 dargestellten
Ausführungsform so aneinandergesetzt, daß sich im Grundriß rechteckige oder quadratische Zellen ergeben. Hierbei erstrecken sich die Betonfertigteilelemente zweckmäßig über die gesamte Höhe der Lagerstätte.

Obgleich dies in den Figuren nicht näher dargestellt ist,
ist es auch möglich, die Behälter 18 bzw. 18' in einem gegenseitigen Abstand voneinander anzuordnen, der dem Behälterdurchmesser entspricht oder ein Vielfaches des Behälterdurchmessers D beträgt. Beispielsweise könnte die mittlere Reihe B bei der Anordnung nach Fig. 1 auch fortgelassen werden. Die hierdurch entstehende Gasse muß dann nur
an den Schmalseiten, von denen eine in Fig. 1 mit 37 angedeutet ist, durch eine geeignete Abschottung, beispielsweise durch ein T-förmiges Betonfertigelement 29 oder durch
eine halbe Betonsilozelle 18 verschlossen werden. Die Gasse
kann dann nach dem Füllen der Behälter 18 der Reihen A und
C ebenfalls mit Abfällen gefüllt werden, wobei die Außenseiten der Behälter dieser Reihen zusammen mit den Abschottungen an den Enden 37 die Seitenwände für den einzubringenden Müll bilden.

Nachdem auf dem gesamten Areal 15 der Lagerstätte 10 oben
offene Behälter 18 errichtet worden sind, die mindestens
einen Teil der Grundfläche dieses Areals einnehmen, aber
auch schon die gesamte Grundfläche bedecken können, und
nachdem der Aushubraum 25 verfüllt worden ist, wird ein Behälter 18 nach dem anderen mit den Abfällen gefüllt. Um das Niederschlagswasser fernzuhalten und den Arbeitsablauf witterungsunabhängig zu machen, wird der jeweils zu befüllende Behälter 18 mit einem ortsbeweglichen Wetterschutzdach abgedeckt, das auf den Seitenwänden 19 der Behälter 18 ruht und mindestens den einen Behälter 18 überspannt, der gerade befüllt wird. Zum Befüllen wird eine Stetigförderanlage verwendet, die in ihrer Gesamtheit mit 39 bezeichnet ist und aus einem Zuförderer 40 und einem Verteilförderer 41 besteht. Der Zuförderer 40 hat mindestens außerhalb des Wetterschutzdaches 38 eine hier nicht näher dargestellte Überdachung, damit die ihm aufgegebenen Abfälle nicht der Witterung ausgesetzt sind und nicht naß werden oder vom Wind fortgeblasen werden können. Der Zuförderer 40 übergibt sein Fördergut etwa in der Mitte des jeweiligen Behälters 18 auf den Verteilförderer 41, der im Inneren des Behälters 18 um dessen senkrechte Mittelachse drehbar ist und das Fördergut über den Umfang des jeweiligen Behälters 18 verteilt.

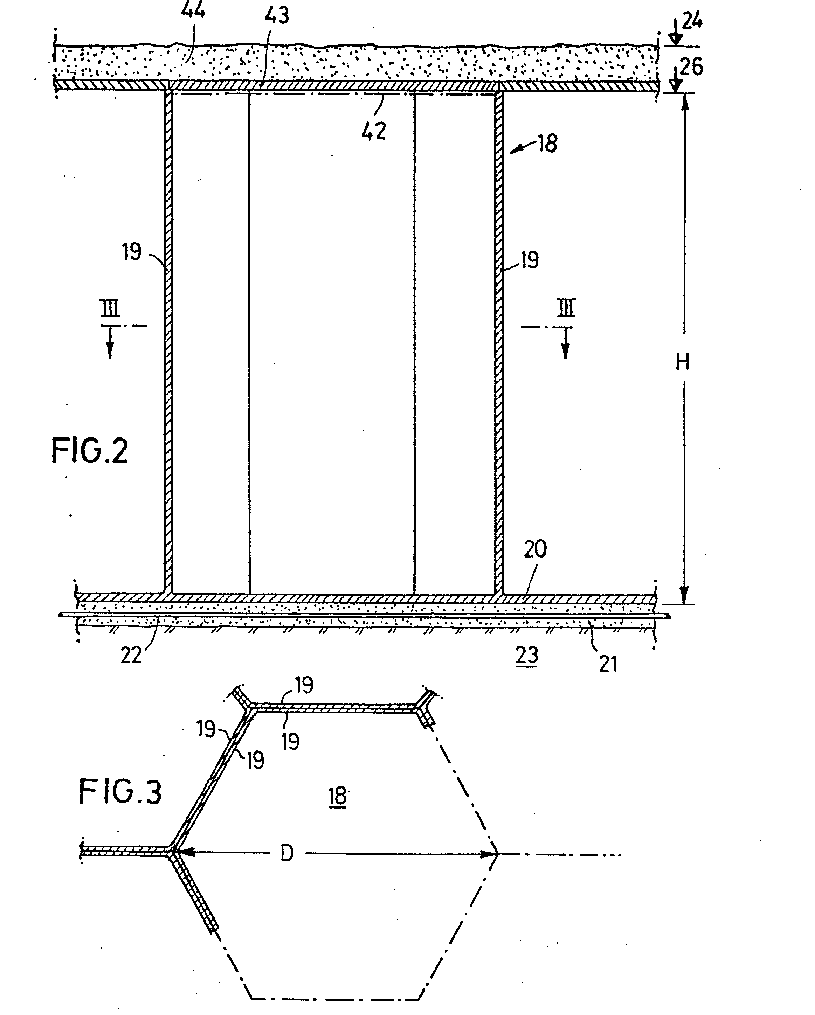

Sobald der erste Behälter 18 mit Müll gefüllt ist, wird er mit einer Folie 42 aus wasserundurchlässigem Material (Fig. 2) abgedeckt und mit einer leicht bewehrten Betondecke 43 verschlossen. Die Betondecke 43 kann aus Ortbeton hergestellt werden, der unmittelbar auf die Folie 42 aufgebracht wird. Es ist aber auch möglich, für die Betondecke 43 Stahlbeton- oder Spannbetonfertigteile zu verwenden.

Das Wetterschutzdach 38 wird dann nach Entfernen der Absturzsicherung auf den nächsten Behälter 18 umgesetzt. Desgleichen wird die Stetigförderanlage 39 in den zweiten Behälter gebracht, der dann ebenso wie der erste Behälter

- 13 -

0187874

mit Abfällen gefüllt und verschlossen wird. In gleicher Weise wird fortgefahren, bis alle Behälter 18 der Lagerstätte 10 mit Abfällen gefüllt und mit Betondecken 43 verschlossen sind. Das gesamte Areal wird dann mit einer Erdbodenschicht 44 (Fig. 2) von etwa einem Meter Dicke abgedeckt und anschließend begrünt oder bepflanzt. Diese Bodenabdeckung kann auch in Teilabschnitten unmittelbar nach dem Befüllen und Verschließen der einzelnen Behälter vorgenommen werden.

Die Erfindung ist nicht auf die dargestellten und beschriebenen Ausführungsbeispiele beschränkt, sondern es sind mehrere Änderungen und Ergänzungen möglich, ohne den Rahmen der Erfindung zu verlassen. Beispielsweise ist es auch möglich, die Behälter zur Aufnahme der Abfälle auch ohne Aushub nach Abtrag des Mutterbodens unmittelbar auf der Geländeoberfläche aufzusetzen. Wichtig ist nur, daß das Grundwasser und das Oberflächenwasser nicht an die Abfälle herankommt. Das Wetterschutzdach kann auch größer sein und gleichzeitig mehrere Behälter überspannen. Es kann insbesondere auch zur Abdeckung des Zwischenraumes zwischen im Abstand voneinander angeordneten Behältern verwendet werden. Schließlich ist es auch möglich, das Areal der Lagerstätte durch einfache Wände in Behälter zu unterteilen, die dann nacheinander gefüllt und verschlossen werden, wobei das Wetterschutzdach auf diesen Wänden ruht und gegebenenfalls auf diesen verfahrbar ist.

- 14 -                          0187874

A n s p r ü c h e :

1. Lagerstätte für Abfälle, insbesondere für Abfälle, welche in Flüssigkeiten löslicheund/oder durch Flüssigkeiten abschwemmbare Schadstoffe enthalten, gekennzeichnet durch mehrere, auf einer undurchlässigen Unterlage (20) angeordnete Behälter (18,18',18'', 18''') mit diese seitlich begrenzenden Wänden (19 , bzw. 31,32 bzw. 35,36), auf denen ein Wetterschutzdach (38) angeordnet ist, welches von einem Behälter (18) zu einem anderen Behälter (18) bewegbar ist.

2. Lagerstätte nach Anspruch 1, dadurch gekennzeichnet, daß das Wetterschutzdach (38) mindestens einen der Behälter (18) überspannt.

3. Lagerstätte nach Anspruch 1 oder 2, dadurch gekennzeichnet, daß die Wände (19 bzw. 31,32 bzw. 35,36) der Behälter (18) aus Beton bestehen.

4. Lagerstätte nach einem der Ansprüche 1 bis 3, dadurch gekennzeichnet, daß die Behälter (18 bzw. 18') eine geschlossene Umfangswand (19) haben und mit einer Betondecke (43) verschließbar sind.

5. Lagerstätte nach einem der Ansprüche 1 bis 4, dadurch gekennzeichnet, daß die Behälter (18) auf einer Betonsohle (20) angeordnet sind.

- 15 -    0187874

6. Lagerstätte nach einem der Ansprüche 1 bis 5, dadurch gekennzeichnet, daß die Wände (32,31 bzw. 35,36) der Behälter (18" bzw. 18"') aus Stahlbeton- oder Spannbetonfertigteilen (28 bzw. 29) bestehen.

7. Lagerstätte nach einem der Ansprüche 1 bis 6, dadurch gekennzeichnet, daß die Behälterwände (19 bzw. 31,32 bzw. 35,36) und/oder die Betonsohle (20) mit einer gegen betonaggressive Stoffe widerstandsfähigen Beschichtung versehen sind.

8. Lagerstätte nach einem der Ansprüche 1 bis 7, dadurch gekennzeichnet, daß die Behälter (18) in einem gegenseitigen Abstand (a) voneinander angeordnet sind.

9. Lagerstätte nach einem der Ansprüche 1 bis 8, dadurch gekennzeichnet, daß die Behälter (18) dicht an dicht nebeneinandergesetzt sind.

10. Lagerstätte nach einem der Ansprüche 1 bis 9, dadurch gekennzeichnet, daß die Behälter (18) einen sechseckigen Grundriß haben.

11. Lagerstätte nach einem der Ansprüche 1 bis 10, dadurch gekennzeichnet, daß zum Beschicken der Behälter (18) mindestens ein überdachter Stetigförderer (39) vorgesehen ist, der von einem Behälter (18) zum anderen versetzbar ist.

12. Verfahren zum Herstellen, Füllen und Verschließen einer Lagerstätte für Abfälle nach einem der Ansprüche 1 bis 11, dadurch gekennzeichnet, daß auf einem ebenflächigen, undurchlässigen Untergrund (20) mehrere, an ihrer Oberseite zunächst offene Betonsilozellen (18) errichtet werden, von denen die erste
mit einem ortsbeweglichen Wetterschutzdach (38) und
die übrigen mit einer Absturzsicherung (27) versehen
werden, daß danach eine Silozelle (18) nach der anderen mit Hilfe einer Stetigförderanlage (39) randvoll mit den Abfällen gefüllt, mit einer Folie (42)
o.dgl. abgedeckt und mit einer bewehrten Betondecke
(43) dicht verschlossen wird, wobei das Wetterschutzdach (38) und die Stetigförderanlage (39) von einer
Silozelle (18) zur anderen weiterbewegt werden.

13. Verfahren nach Anspruch 12, dadurch gekennzeichnet,
    daß vor dem Errichten der Betonsilozellen (18) im
    Areal (15) der Lagerstätte (10) eine Baugrube ausgehoben wird, deren Tiefe und Grundfläche der Höhe (H)
    und Grundfläche des von der Gesamtheit der Silozellen (18) umschlossenen Raumes entspricht, und daß die
    Baugrubensohle (23) mit einer an eine Revisionsanlage
    angeschlossenen, entwässernden Filterschicht (21)
    und einer bewehrten Betonsohlplatte (20) versehen
    wird, und daß nach dem Errichten der Betonsilozellen
    (18) der diese umgebende Aushubraum (25) mit Boden
    verfüllt wird.

14. Verfahren nach Anspruch 12 oder 13, dadurch gekennzeichnet, daß die Silozellen (18) nach ihrem Verschließen mit der Betondecke (43) mit einer Erdboden-
    schicht (44) überdeckt werden.

15. Verfahren nach einem der Ansprüche 12 bis 14, dadurch gekennzeichnet, daß die Lagerstätte (10) mit einem mindestens bis zur Oberkante (26) der Silos reichenden Schutzwall (11) aus wasserundurchlässigem Material und mit einer Umzäunung (14) umgeben wird.

FIG.1

0187874

FIG.2

FIG.3

Sa 635

# FIG.4

Labels: 18', 18', 18', 18'

# FIG.5

Labels: 28, 32, 33, 33, 10, 32, 31, 18", 31, 18", 31, 18", 30, 32, 30, 31, 31, 28, 32, VI, VI

# FIG.7

Labels: 29, 35, 10, 36, 18''', VIII, VIII

# FIG.8

Labels: 29, 36, 35, 34, 34

# FIG.6

Labels: 28, 31, 31, 32

Sa 635

0187874

Nummer der Anmeldung

**EUROPÄISCHER RECHERCHENBERICHT**

## EINSCHLÄGIGE DOKUMENTE

EP 84710004.7

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | <u>DE - A - 2 307 196</u> (SCHLEWEIS) <br><br> * Patentanspruch, Merkmale 2,3, 7; Abb. 5,6,8; Seite 6, Absatz g * | 1,3-5, 9,10, 12,14 | B 09 B   1/00 <br><br> E 04 H   7/26 |
| X | <u>DE - A1 - 2 407 487</u> (MIRGEL) <br><br> * Patentansprüche 1,2,6; Fig. 1-3; Seite 4, vorletzter Absatz * | 1,3,4, 7,9,14 | |
| X | <u>CH - A5 - 587 389</u> (SPÄTH) <br><br> * Patentanspruch; Unteransprüche 7,8,10; Fig; Spalte 4, Zeilen 13-27; Spalte 5, Zeilen 18-20 * | 1,3,4, 6,7,9, 12-15 | |
| A | <u>US - A - 1 796 168</u> (STAIR) <br><br> * Seite 1, Zeilen 31-44 * | 1,2 | RECHERCHIERTE SACHGEBIETE (Int. Cl.4) |
| A | <u>US - A - 4 281 490</u> (FOODY) <br><br> * Ansprüche 1,3; Fig. 1,2 * | 1,3,6, 9,10 | B 09 B <br> B 65 G <br> B 65 F <br> E 04 H |
| A | <u>EP - A1 - 0 063 477</u> (BARNISH) <br><br> * Ansprüche 1-3,6-8; Fig. 1 ; Seite 9, Zeil 13 * | 1,3,9-11 | |
| E | <u>DE - A1 - 3 303 067</u> (STRABAG BAU-AG) <br><br> * Ansprüche 1-15 * | 1-15 | |

Der vorliegende Recherchenbericht wurde für alle Patentansprüche erstellt.

| Recherchenort | Abschlußdatum der Recherche | Prüfer |
|---|---|---|
| WIEN | 02-12-1985 | REISER |